Europäisches Patentamt

European Patent Office

Office européen des brevets

(19)

(11) Publication number: **0 308 049**

**A2**

## (12) EUROPEAN PATENT APPLICATION

(21) Application number: 88306780.3

(51) Int. Cl.⁴: **B60T 11/20**

(22) Date of filing: 22.07.88

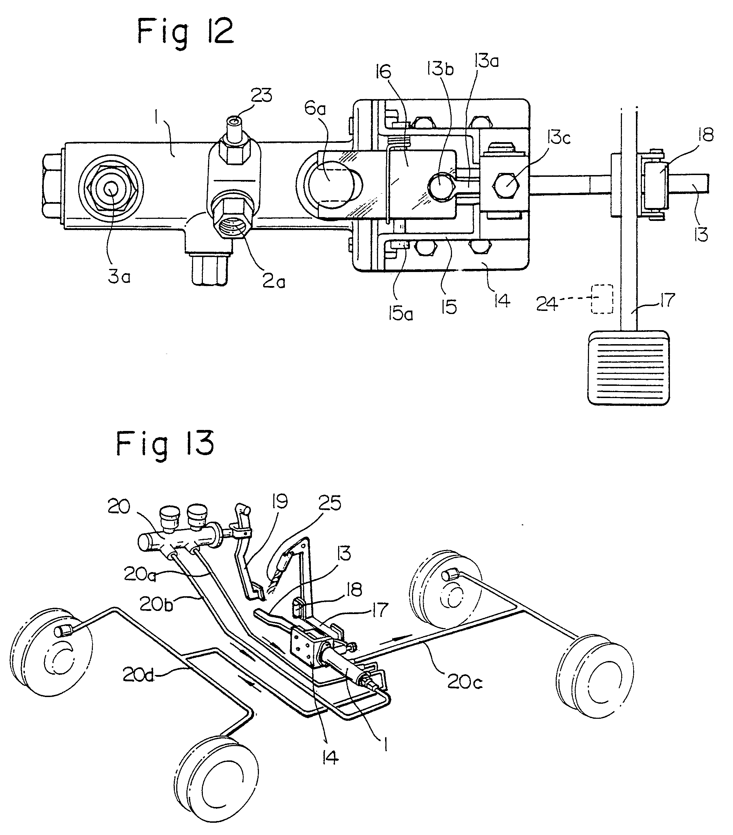

A request for addition of figures 10 and 11 has been filed pursuant to Rule 88 EPC. A decision on the request will be taken during the proceedings before the Examining Division (Guidelines for Examination in the EPO, A-V, 2.2).

(30) Priority: **24.07.87 KR 878079**

(43) Date of publication of application:
**22.03.89 Bulletin 89/12**

(84) Designated Contracting States:
**DE FR GB IT**

(71) Applicant: **Kang, Byung Kook**
**211-461, Sangdo 4-dong Dongjak-ku**
**Seoul(KR)**

Applicant: **Soh, Jin Chung**
**525-24, Sinsa-dong Kangnam-ku**
**Seoul(KR)**

Applicant: **Shin, Young Bum**
**Hyundai Apt. 119-202 288 Apgoojung-dong**
**Kangnam-ku**
**Seoul(KR)**

(72) Inventor: **Kang, Byung Kook**
**211-461, Sangdo 4-dong**
**Dangjak-ku Seoul(KR)**
Inventor: **Soh, Jin Chung**
**525-24, Sinsa-dong**
**Kangnam-ku Seoul(KR)**

(74) Representative: **Cheyne, John Robert**
**Alexander Mackenzie et al**
**HASELTINE LAKE & CO. 28 Southampton**
**Buildings Chancery Lane**
**London WC2A 1AT(GB)**

(54) **Hydraulic brake device using motor vehicle clutch pedal.**

(57) Backward movement preventing hydraulic cylinder (1) manipulated by clutch pedal is provided for a final clearance operation of clutch pedal and is connected to brake master cylinder by hydraulic line. Chamber 1 piston (7) is compressed by chamber 1 piston operating rod (14a) connected to piston operating lever (13). Piston backward movement preventing pin (6) is set up within the top face upper projection (1g) of cylinder rear part. The inner central part of backward movement preventing cylinder (1) is divided by the dividing wall (1a) with chamber 1(2) and chamber 2(3), and chamber 1 oil flow holes (1c) is formed by making oil flow hole (1b) communicating with chamber 1 oil inlet port (4) through the dividing wall (1a) and also in its center the front end is inserted in order for the chamber 2 piston operating rod (5) to enter and exit and sealed by sealing (1d). Chamber 1 oil flow hole (1c) is opened and closed by chamber 1 double check valve (9) inserted on the front end of chamber 2 piston operating rod (5) supported with chamber 1 piston (7) having an inclined face end jaw (7b) on the back end. Chamber 2 oil flow hole (3d) is opened and closed by chamber 2 double check valve (11) supported by chamber 2 piston return spring (12b) along with chamber 2 piston (12) compressed by chamber 2 piston operating rod (5). Chamber 1 double check valve (9) and chamber 2 double check valve (11) close chamber 1 oil flow hole (1c) and chamber 2 oil flow hole (3d) when the rearward inclined face end jaw (7b) of chamber 1 piston is stopped by the piston backward movement prevent-

EP 0 308 049 A2

ing pin (6).

# Fig 4

# HYDRAULIC BRAKE DEVICE USING MOTOR VEHICLE CLUTCH PEDAL

## BACKGROUND OF THE INVENTION

This invention relates to the hydraulic brake device utilizing motor vehicle clutch pedal such that a motor vehicle is able to proceed climbing a slope without jolting after a temporary stop.

In general, when climbing a slope, a motor vehicle driver must push clutch pedal and brake pedal almost simultaneously in order to stop and after that the driver must release the brake pedal in order to push accelerator pedal for proceeding the climbing the slope. At this moment the motor vehicle tends to jolt due to the inevitable inaccuracy of synchronizing the optimum dual operation of clutch and accelerator momentarily, and therefore the driver and passenger are subject to the undesirable jolts and also the jolt causes the detrimental effect to engine, clutch, transmission, coupling, gears, tires etc., and more than anything else it may lead to an accident by colliding with other motor vehicle on the back, and these problems tend to be serious in case of severe slope.

Therefore, the present invention intends to tackle these problems, and the backward movement preventing hydraulic cylinder is provided for sending pressurized hydraulic fluid of the brake master cylinder to the brake lines. Also, when pushing the clutch pedal to its final clearance and simultaneously pushing the brake pedal, the hydraulic fluid inside the brake master cylinder is sent to the brake lines through the backward movement preventing cylinder while the first and second chamber piston of the above cylinder is compressing the hydraulic fluid, and finally the braking operation is effected. At this stage of operational sequence, the compressed fluid inside the backward movement preventing cylinder is delivered to brake lines if only pushing the clutch pedal with the brake pedal released and the braking operation is maintained. When pushing only the clutch pedal without pushing the brake pedal, the amount of hydraulic fluid inside the backward movement preventing cylinder lacks in operating the brakes and it does not affect any normal operation, it only takes effect on climbing a slope. And also if any one of wheel brakes is leaking, the safe breaking operation is maintained by other wheel brakes.

## OBJECT OF INVENTION

The primary object of the present invention is to provide the hydraulic brake device using clutch pedal in order to proceed climbing a slope without any backward movement after stopping for a moment.

Another object of the present invention is to provide the hydraulic brake device for braking other wheel brakes in case of any wheel brake failure.

## BRIEF DESCRIPTION OF DRAWINGS

These and other objects as well as advantages of the present invention will become clear by the following description of a preferred embodiment of the present invention with reference to the accompanying drawings, wherein:

Figure 1 is a perspective view of the present invention;

Figure 2 is a partially cutaway front view of backward movement preventing cylinder of the present invention;

Figure 3 is an exploded view of backward movement preventing cylinder of the present invention;

Figure 4 is vertical section of backward movement preventing cylinder;

Figure 5 is a partially enlarged sectional view showing that the hydraulic fluid inside the brake master cylinder passes through the backward movement cylinder to the brake lines when only the brake pedal is pushed;

Figure 6 is a sectional view showing that chamber 1 and 2 piston move in case of pushing only clutch pedal to the limit of the final clearance;

Figure 7 is a sectional view showing that chamber 1 and 2 pistons are moving back by high pressure hydraulic fluid of brake master cylinder and the end jaw of rear inclined plane of chamber 1 piston is stopped by the piston rearward movement preventing pin when in case that clutch pedal and brake pedal are pushed together;

Figure 8 is a sectional view showing that, at the moment of stepping off brake pedal, chamber 1 double-check valve is closed by chamber 1 piston return spring force, and chamber 2 double-check valve is closed by the pushing force of chamber 2 piston by double piston oil flow rod and chamber 2 double-check valve return spring force, and ball check valve is closed by spring force;

Figure 9 is a sectional view showing that the compressed fluid inside of chamber 1 and 2 passes into brake lines in case that the driver steps off the brake pedal and push only clutch pedal;

Figure 10 is a sectional view showing the movement of chamber 1 piston in case of rear wheel brake failure;

Figure 11 is a sectional view showing the movement of chamber 2 piston in case of front wheel brake failure;

Figure 12 is a plan view of the present invention:

Figure 13 is a perspective view of the brake system equipped with the device of the present invention;

Figure 14 is a left side view of the present invention;

Figure 15 is a side view showing the operational principle using clutch pedal; and

Figure 16 is a sectional view showing the oil return tapered groove provided on the pressurized oil hole face.

DESCRIPTION OF INVENTION

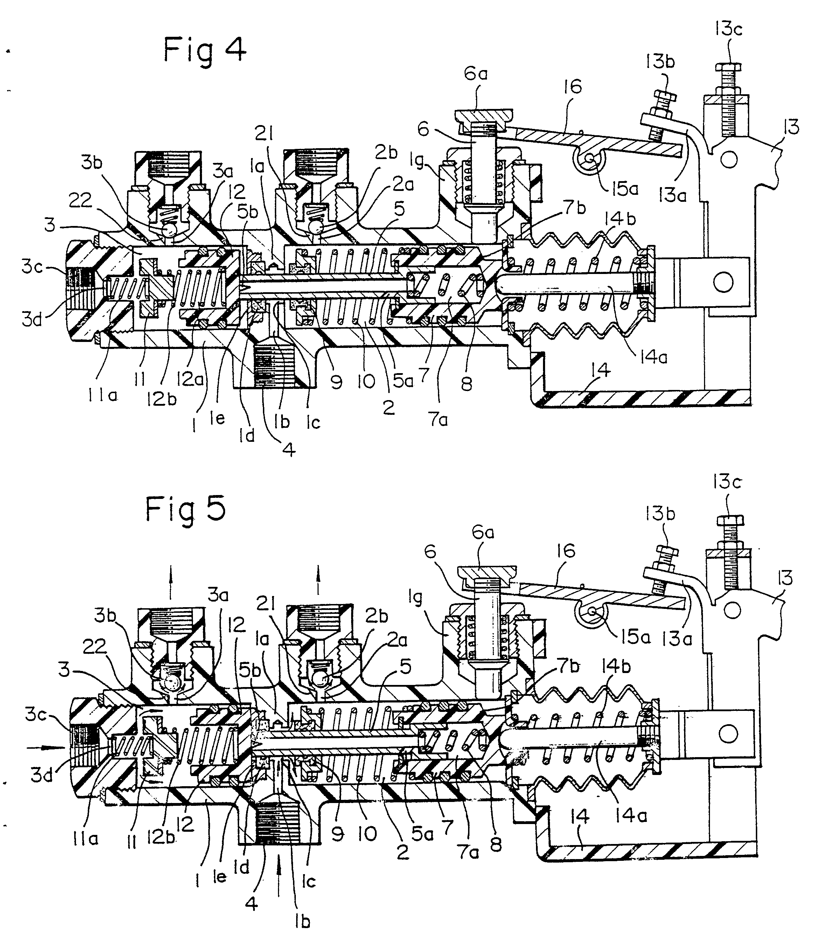

In Figure 4, backward movement preventing cylinder(1) is provided with chamber 1(2) and chamber 2(3) by the partition wall (1a) inside of central part, and the partition wall (1a) has chamber 1 oil flow hole (1c) by making an oil flow hole(1b) communicating with chamber 1 oil inlet port (4). The backward movement preventing cylinder (1) is hollow type, and the chamber 2 piston operating rod (5) having oil flow holes (5a) (5b) is connected to chamber 1(2) and chamber2(3), and the frontal part of this chamber 2 piston operating rod (5) is slidably inserted into the sealing (1d) of the partition wall (1a) and each chamber is properly sealed off.

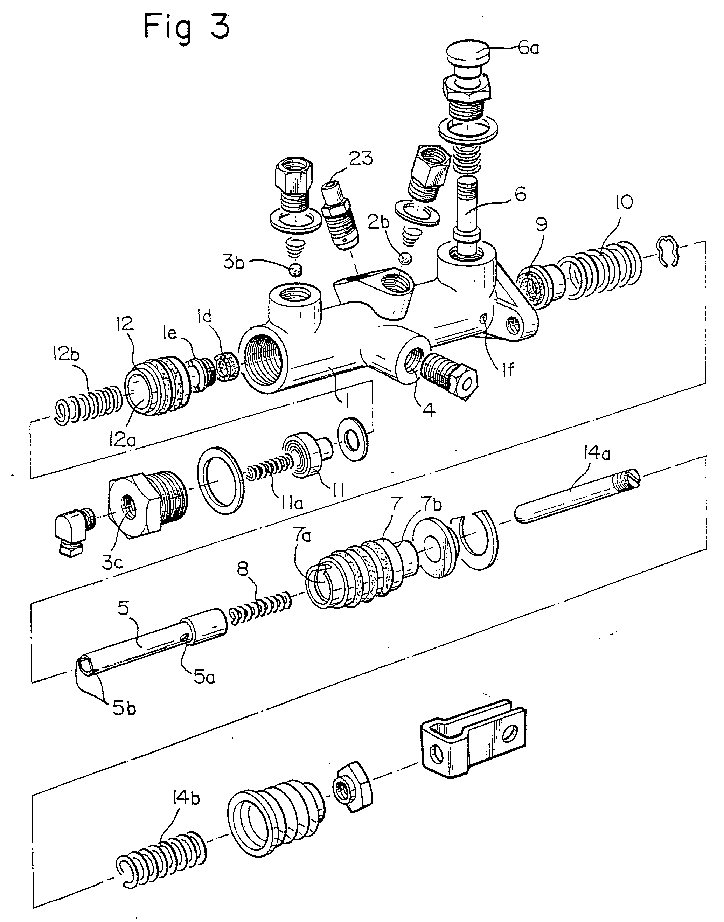

On the partition wall (1a) of chamber 1(2), there is chamber 1 oil outlet hole(2a)which is opened and closed by ball check velve(2b), and in the rear end of chamber 1(2), piston backward movement preventing pin(6) is inserted in order to be risen and fallen inside of cylinder upper projection (1g) (refer to Figure 3) and also is placed on the periphery of rear end slope plane end jaw (7b) of chamber 1 piston (7).

The rear end of chamber 2 piston operating rod (5) is inderted in the inside hole (7a) of chamber 1 piston (7) and supported with chamber a piston (7) by chamber 2 piston operating rod return spring (8) Chamber 1 double check valve (9) is inserted on the front end of chamber 2 piston operating rod (5), and maintains a slight interval 1 with chamber 1 oil flow hole (1c) by chamber 1 piston return spring (10) having certain length (the length of which chamber 1 double check valve (9) is slightly spaced apart from chamber 1 oil flow hole (1c) (refer to Figure 4)). In the chamber 2(3), chamber 2 oil outlet hole (3a) is opened and closed by ball check valve (3b). The rear end of chamber 2 double check valve (11) is inserted in the inside hole (12a) of chamber 2 piston (12), and opens and closes the chamber 2 oil flow hole (3d) communicating with chamber 2 oil inlet (3c) by chamber 2 double check valve return spring (11a) arranged inside, and chamber 2 double check valve return spring (11a) is inserted and maintains a slight interval between chamber 2 double check valve (11) and chamber 2 oil flow hole (3d).

The above-mentioned backward movement preventing cylinder (1) is attached to the cylinder bracker (14) which is arranged for the piston operating lever (13) to be able to push chamber 1 piston operating rod (14a).

The front end of piston backward movement preventing pin fork (16) which is shaft mounted with shaft (15a) on shaft bracket (15) on cylinder bracket (14), is inserted on piston backward movement preventing pin head (6a) and elastically supported upwardly, and the other end of the fork (16) is pressed against the adjusting bolt (13b) of piston backward movement preventing pin fork which is threaded on the inside periphery (13a) of piston actuating lever (13). A roller (18) is mounted on the clutch pedal stem pressing piston operating lever (13).

And chamber 2 piston operating rod return spring (8), chamber 1 piston return spring (10), chamber 2 piston return spring (12b) and chamber 2 double check valve return spring (11a) have the elastic force by diminishing order (i.e., 8>10>12b>11a), and maintain the same distances of compression and return of chamber 1 piston (7) and chamber 2 piston (12), and consequently make the same adjustments of compression force of chamber 1 piston (7) and chamber 2 piston (12), and when releasing the brake pedal (19) after pushing clutch pedal (17) and brake pedal (19), chamber 1 double check valve (9) and chamber 2 double check valve (11) are closed instantly, and in case of brake failure of rear wheel, compression force of chamber 2 piston (12) is maintained. (If the elastic force of chamber 2 piston operating and return spring (8) is weak or same as that of chamber 2 piston return spring (12b), chamber 2 piston (12) is not compressed and front wheel brake can not be operated in case of rear wheel brake failure).

IN FIGURES, reference numeral (1e) is sealing fixing screw, (1f) is the air flow hole proved in the chamber 1 piston rear space, (13c) is piston operating lever adjusting bolt, (14b) is chamber 1 piston operating rod return spring, (19) is brake pedal, (20) is brake tandem master cylinder, (20a) is chamber 1 oil inlet pipe, (20b) is chamber 2 oil inlet pipe, (20c) is rear wheel brake line, (20d) is front wheel brake line, (21) is the oil flow taper groove provided in teh chamber 1 oil flow hole face, (22) is the oil flow taper groove provided in chamber 2 oil flow hole face, (23) is exhaust plug, and (24) is the clutch pedal operation distance limit adjusting plate and it limits the clutch pedal operation distance when clutch pedal and brake pedal are pushed together in case of level road driving, and thus the braking force (by clutch pedal) will not occur during level road driving, and finally (25) is clutch cable line.

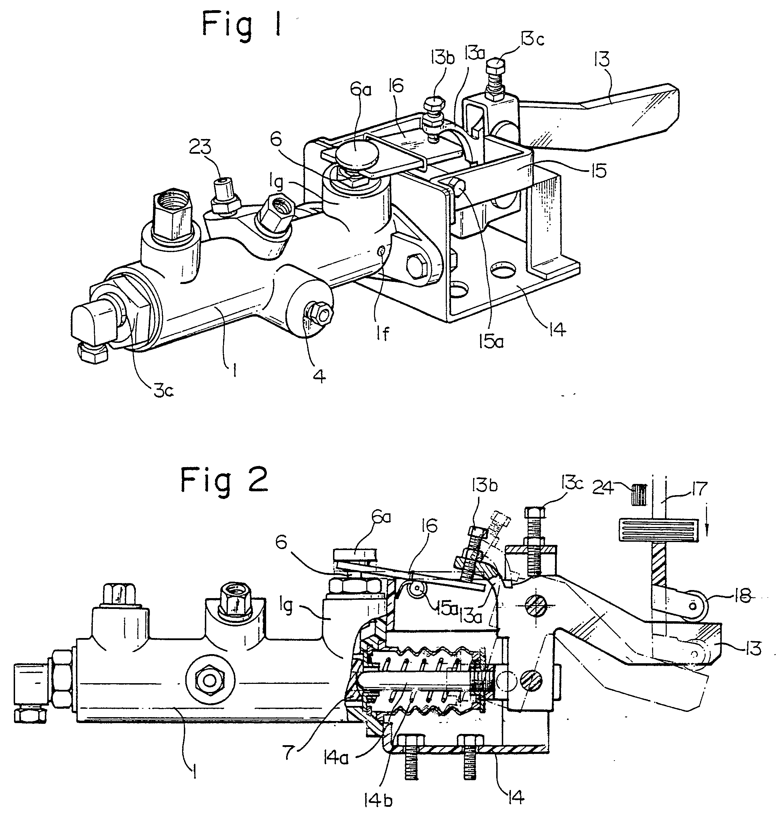

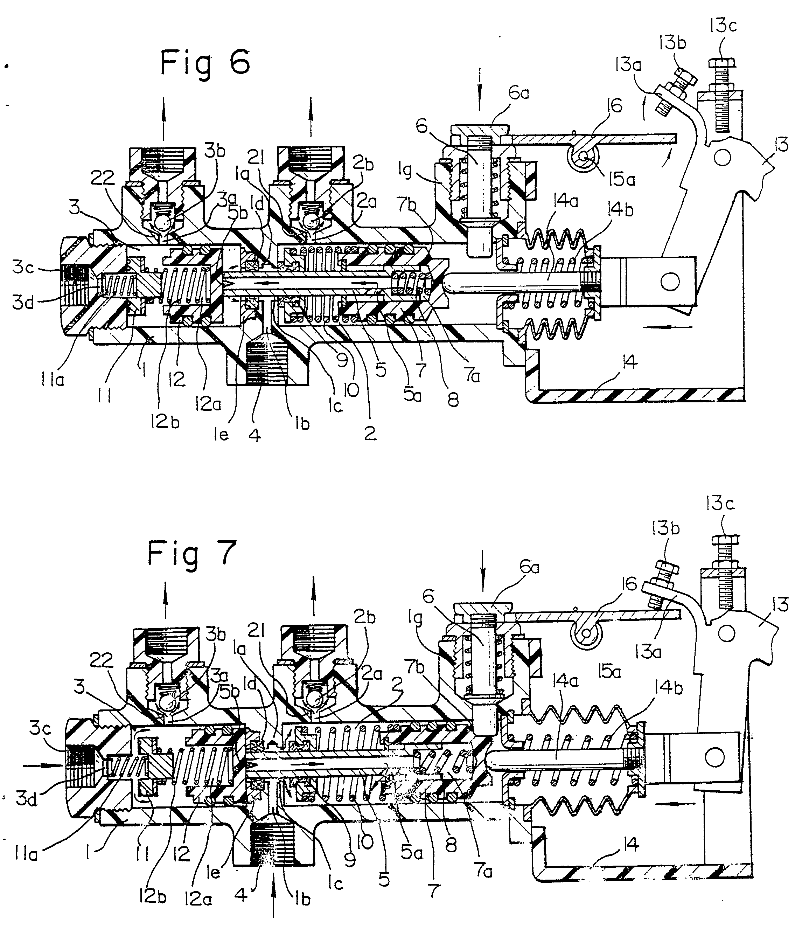

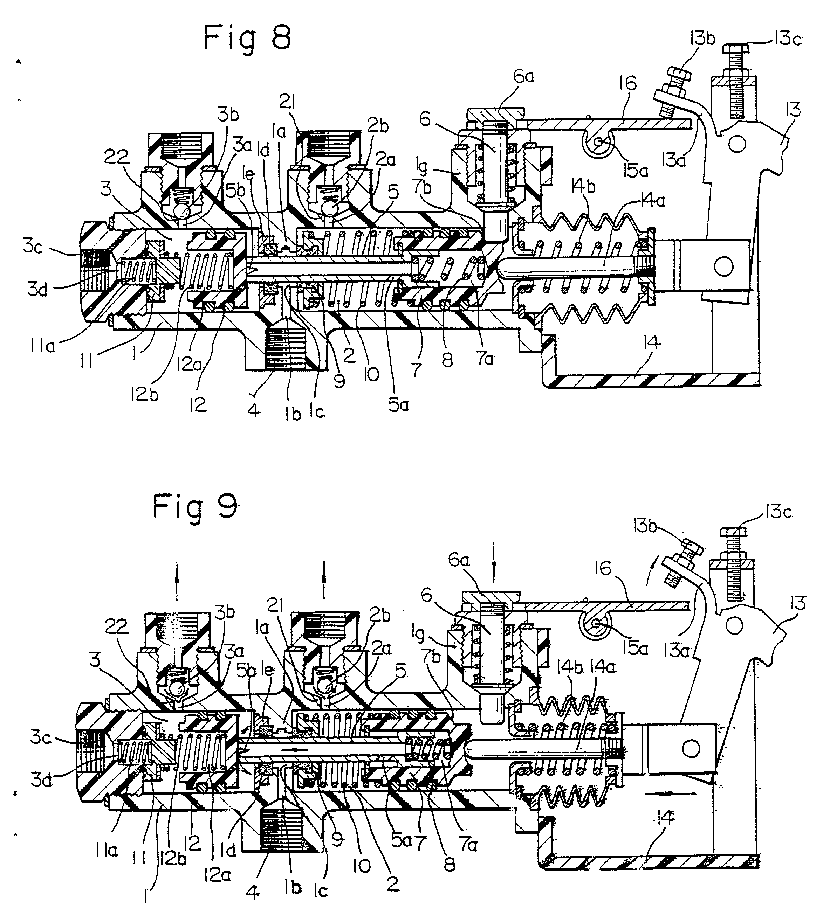

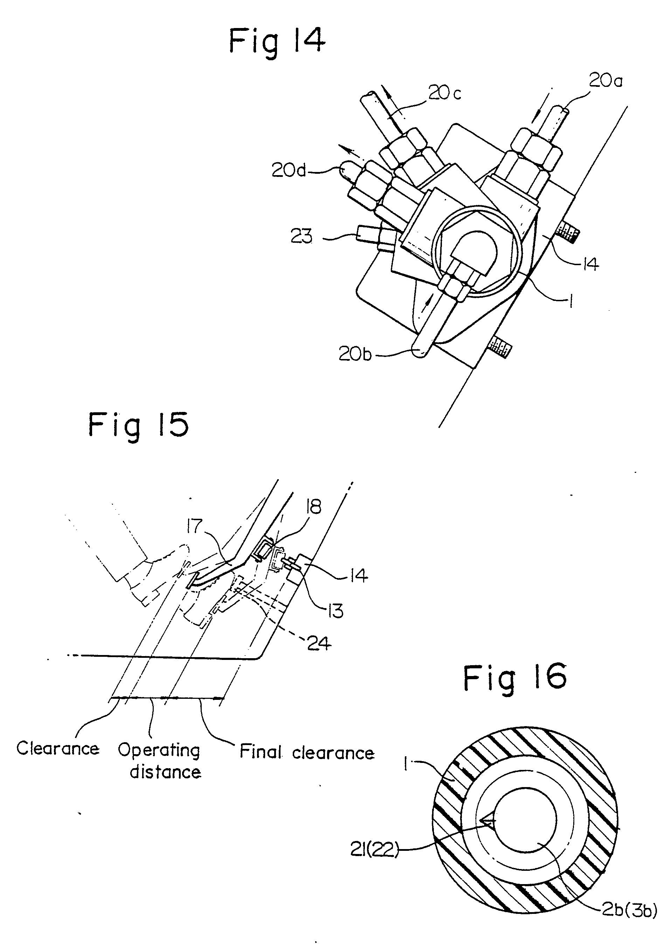

According to the present invention, the backward movement preventing cylinder (1) is mounted on the front wall of body around the final clearance position of clutch pedal (17), and the piston operating lever (13) is so positioned that it is located on the boundary point between the final clearance of clutch pedal (17) and the clutch operating distance, and the chamber 1 oil inlet pipe (20a) connected to brake tandem master cylinder (20) is connected to chamber 1 oil inlet port (4), and chamber 2 oil inlet pipe (20b) is connected to chamber 2 oil inlet (3c), and rear wheel brake line (20c) is connected to chamber 1 oil flow hole (2a), and the front wheel brakeline (20d) is connected to chamber 2 oil outlet hole (3a). When pushing only the brake pedal (19) in normal operation, the oil inside of brake tandem master cylinder (20) is delivered to chamber 1 oil inlet pipe (20a) through chamber 1(2) and opens ball check valve (2b) and compresses rear wheel brake line (20c) and causes the braking of rear wheel, and also it is delivered to chamber 2 oil inlet pipe (20b) through chamber 2(3) and opens the ball check valve (3b) of chamber 2 oil outlet hole (3a) and compresses the brake line (20d) of front wheel and thus the front wheel brake is operated. When stepping off the brake pedal (M19), ball check valve (2b) (3b) closes, but the compressed oils of front and rear brake line (20d) (20c) are sent to the oil flow taper groove (21) (22) and thus braking is released. At this time, by pushing only clutch pedal to the limit of final clearance, the roller (18) attached to front end of the clutch pedal (17) pushes the piston operating lever (13) (refer to Fig. 2 and 15) and the chamber 1 piston operating rod (14a) compresses chamber 1 piston (7) as shown in Fig. 6, and chamber 2 piston operating rod (5) compresses chamber 2 piston (12), but the amount of oil in chamber 1 and 2 is pre-adjusted in order to be insufficient for any braking and therefore it does not affect any clutch operation. If only clutch pedal (17) is pushed to the limit of final clearance and at the same time brake pedal (19) is pushed, the compression force of chamber 1 piston (7) and chamber 2 piston (12) as shown in Fig. 7 is weaker than that of brake tandem master cylinder (20) in case of applying brake pedal (19), and therefore, by this strong oil pressure, chamber 1 piston (7) is gradually backed up along with chamber 2 piston (12). Thus, the inclined face end jaw (7b) of rear end of chamber 1 piston (7) is stopped by the bottom end of descended piston backward movement preventing pin (6) and accordingly chamber 1 piston (7) won't move back any further, and also chamber 2 piston (12) won't move back any more by pushing chamber 2 piston operating rod (5) and touching the inner end of chamber 2(3). According to the backward movement of chamber 1 piston (7), piston operating rod (14a) also move back and clutch pedal (17) also will slightly rise by piston operating lever (13). And the extent of rise of clutch pedal (17) is the backing distance until the inclined face end jaw (7b) is stopped by piston backward movement preventing pin (6), and in other words the clutch pedal (17) will rise until the descending fork adjustment bolt (13b) of piston backward movement preventing pin is touching the piston backward movement preventing fork (16). Thus, when the backward movement is stopped, chamber 1 double check valve (9) closes chamber 1 oil flow hole (1c) by the force of chamber 1 piston return spring (10), and chamber 2 double check valve (11) closes chamber 2 oil flow hole (3d) by pushing the chamber 2 piston (12) by chamber 2 piston operating rod (5) and by the elastic force of chamber 2 piston return spring (12b) as shown in Fig. 8. Instantly closed chamber 1 oil flow hole (1c) and chamber 2 oil flow hole (3d) open slightly, as shown in Fig. 7, chamber 1 double check valve (9) and chamber 2 double check valve (11) with high pressure oil flowing into the chamber 1 oil inlet pipe (20a) and chamber 2 oil inlet pipe (20b) by the continuous pushing of brake pedal (19), and than delivered to front and rear wheel brake lines (20d) (20c) through chamber 1(2) and chamber 2-(3), and finally front and rear brakes are operated.

Under these conditions, if the brake pedal (19) is released, chamber 1 double check valve (9) closes chamber (1) oil flow hole (1c) by chamber 1 piston return spring (10), and chamber 2 double check valve (11) instantly closes chamber 2 oil flow hole (3d), because the force pushing chamber 2 piston (12) of chamber 2 piston operating rod (5) is transmitted through chamber 2 piston return spring (12b), and also the ball check valve (2b) (3b) is closed by the spring force.

Under these circumstances, as described above, when pushing the clutch pedal (17) to its final clearance after its rise due to pushing the brake pedal (19) and then at the same time releasing the brake pedal (19), the compressed oil filled inside the brake lines (20c) (20d) just about coming into chamber 1(2) and chamber 2(3) through oil flow taper groove (21)(22) formed in chamber 1 oil outlet hole (2a) and chamber 2 oil outlet hole (3a) is pushed into brake lines for maintaining the continued braking, because chamber 2 piston (12) is moved by the pushing force of chamber 1 piston operating rod (14a) as shown in Fig. 9.

And then if the pushed clutch pedal (17) is released, chamber 1 piston operating rod (14a) is moved back by the force of chamber 1 piston operating rod return spring (14b), and also chamber 1 piston (7) and chamber 2 piston (12) are moved back by the forces of chamber 1 piston return spring (10) and chamber 2 piston return spring (12b), and the hydraulic pressure inside the chamber 1(2) and chamber 2(3) is weakened and ball check valves(1c)(3d) are closed, but the hydraulic pressure of brake line is flowing to the taper groove (21) (22) proveded in the chamber 1 oil outlet hole (2a) and chamber 2 oil outlet hole (3a), and therefore front and rear brakings are released and at the same time the piston operating lever (13) is returned by chamber 1 piston operating rod return spring (14b) and also lowers the fork adjusting bolt (13b) of piston backward movement preventing pin, and the above fork adjusting bolt (13b) pushes the rear end of piston backward movement preventing pin fork (16), and the front end of the above piston backward movement preventing poin fork (16) rises with reference to shaft (15a) and also lifts piston backward movement preventing pin (6), and finally returns the chamber 1 piston (7) and chamber 2 piston (12) to their original position as shown in Fig. 4.

Thus, if chamber 1 piston (7) and chamber 2 piston (12) return to their original position, chambe 1 oil flow hole (1c) and chamber 2 oil flow hole (3d) remain opened, and therefore the compressed oil inside the chamber 1 (2) and chamber 2(3) is also delivered to chamber 1 oil inlet pipe (20a) and chamber 2 oil inlet pipe (20b), and accordingly, as shown in Fig. 6 and described above, even if clutch pedal (17) is pushed to the limit of the final clearance, the amount of oil inside chamber 1(2) and chamber 2(3) is adjusted to the amount lacking in braking and consequently clutch operating only is performed.

And in case of rear wheel brake failure, chamber 1 piston (7) does not compress the oil, but chamber 2 piston (12) compresses by chamber 2 piston operating rod (5) and also send the compressed oil of chamber 2(3) to front wheel brake line (20d) and accordingly front wheel braking is performed, and in the case of front wheel brake failure, chamber 2 piston (12) does not compress by the compressed oil of chamber 1(2) communicating with the oil flow holes (5a)(5b) of chamber 2 piston operating rod (5) as shown in Fig. 11, but the chamber 1 piston (7) compresses and sends the compressed oil of chamber 1(2) to rear wheel brake line (20c) and finally rear wheel braking is performed, and if any one of front and rear wheel brake fails, other one brake is operated and there is no problem in overall braking.

According to the present invention, when the clutch pedal (17) is pushed to the limit of its final clearance and the brake pedal (19) is also pushed and then the said brake pedal (19) is released and the said clutch pedal (17) remains pushed, the braking is maintained, and therefore when a car on the slope is stopped and then starts again, the braking is maintained as long as the clutch pedal (17) is kept pushed. And therefore there won't be no backward movement or jolting and the car starts up the slope as soon as the clutch pedal (17) is released, and therefore there won't be any more uneasiness and fatigue on the part of the driver, and probable accidents are prevented, and the fuel consumption becomes less, and many essential parts of clutching and braking operation are relieved of detrimental wears, shocks and impulses, and also in the case of the brake failure of any one of front or rear wheel, other brake is operated instead and in this way safe braking is achieved.

While there has been described what is at present considered to be preferred embodiment of the invention, it will be understood that various modifications may be made therein, and it is intended to cover in the appended claims all such modifications as fall within the true spirit and scope of the invention.

## Claims

1. A motor vehicle having pedal operated hydraulic brake circuitry (20) and a clutch pedal (17), characterized in that a clutch pedal operated brake interlock device (1) is provided whereby contemporaneous clutch and brake operation followed by release of the brake pedal leaves the brakes operative while the clutch remains disengaged, subsequent engagement of the clutch causing the brakes to be released.

2. A motor vehicle as claimed in claim 1, characterized in that the interlock device comprises a hydraulic valve disposed in the brake circuitry between a brake master cylinder and at least one brake slave cylinder.

3. A motor vehicle as claimed in claim 2, characterized in that the valve includes a piston (7) to which a valve element (9) is resiliently connected, the piston (7) being displaceable by operation of the clutch pedal (17) between a first postion in which the valve element is resiliently biasssed into engagement with a valve seat, and a second position in which the valve element is spaced from the valve seat, a stop member (6) being provided, which is responsive to the postion of the clutch pedal, for preventing displacement of the piston (7) to the second position.

4. A hydraulic brake device preventing backward movement by using motor vehicle clutch pedal, wherein backward movement preventing cylinder (1) is mounted on cylinder bracket (14), chamber 1 piston (7) is compressed by chamber 1 piston operating rod (14a) connected to piston operating lever (13), piston backward movement preventing pin(6) is set up within the top face upper projection (1g) of cylinder rear part in order to be risen and fallen by piston backward movement preventing pin fork (16) operated by piston operating lever (13), the inner central part of backward movement preventing cylinder (1) is divided by the dividing wall (1a) with chamber 1(2) and chamber 2(3), chamber 1 oil flow hole (1c) is formed by making oil flow hole (1b) communicating with chamber 1 oil inlet port (4) through the dividing wall (1a) and also in its center the front end is inserted in order for the chamber 2 piston operating rod (5) to enter and exit and sealed by sealing (1d), chamber 1 oil flow hole (1c) is opened and closed by chamber 1 double check valve (9) inserted on the front end of chamber 2 piston operating rod (5) supported with chamber 1 piston (7) having an inclined face end jaw (7b) on the back end, chamber 2 oil flow hole (3d) is opened and closed by chamber 2 double check valve (11) supported by chamber 2 piston return spring (12b) along with chamber 2 piston (12) compressed by chamber 2 piston operating rod (5), chamber 1 double check valve (9) maintains some distance from chamber 1 oil flow hole (1c), chamber 2 double check valve (11) maintains some distance from chamber 2 oil flow hole (3d) by the chamber 2 piston return spring (12b) and chamber 2 double check valve return spring (11a) of certain lengths, and the spring forces are adjusted to be weak in the order of chamber 2 piston operating rod return spring (8), chamber 1 piston return spring (10), chamber 2 piston return spring (12b) and chamber 2 double check valve return spring (11a), and characterized in that chamber 1 double check valve (9) and chamber 2 double check valve (11) close chamber 1 oil flow hole (1c) and chamber 2 oil flow hole (3d) when the rearward inclined face end jaw (7b) of chamber 1 piston is stopped by the piston backward movement preventing pin (6).

# Fig 1

# Fig 2

# Fig 3

Fig 4

Fig 5

EP 0 308 049 A2

Fig 6

Fig 7

Fig 8

Fig 9

# Fig 12

# Fig 13

EP 0 308 049 A2

## Fig 14

20c
20a
20d
23
14
1
20b

## Fig 15

17
18
14
13
24

Clearance   Operating   Final clearance
distance

## Fig 16

1
21(22)
2b(3b)